## Europäisches Patentamt
## European Patent Office
## Office européen des brevets

(11) Publication number: **0 119 862**
**B1**

(12) **EUROPEAN PATENT SPECIFICATION**

(45) Date of publication of patent specification: **27.12.90**

(21) Application number: **84301856.5**

(22) Date of filing: **19.03.84**

(51) Int. Cl.⁵: **H 04 N 3/14**

(54) **Solid-state color imaging apparatus.**

(30) Priority: **17.03.83 JP 44737/83**
**05.09.83 JP 162745/83**

(43) Date of publication of application:
**26.09.84 Bulletin 84/39**

(45) Publication of the grant of the patent:
**27.12.90 Bulletin 90/52**

(84) Designated Contracting States:
**FR GB NL**

(56) References cited:
**EP-A-0 067 043**
**EP-A-0 067 629**
**GB-A-2 014 397**

(73) Proprietor: **NEC CORPORATION**
**7-1, Shiba 5-chome Minato-ku**
**Tokyo 108-01 (JP)**

(72) Inventor: **Teranishi, Nobukazu**
**c/o NEC Corporation 33-1, Shiba 5-chome**
**Minato-ku Tokyo (JP)**
Inventor: **Kohno, Akiyoshi**
**c/o NEC Corporation 33-1, Shiba 5-chome**
**Minato-ku Tokyo (JP)**

(74) Representative: **Pears, David Ashley et al**
**REDDIE & GROSE 16 Theobalds Road**
**London WC1X 8PL (GB)**

**Description**

This invention relates to a solid-state color imaging apparatus.

An interline transfer CCD imaging element (hereinbelow, abbreviated to "IL-CCD imaging element") comprises picture elements arrayed regularly in a horizontal direction and a vertical direction, vertical CCD registers for transferring in the vertical direction signal charges photoelectrically converted by and stored in the picture elements, a horizontal CCD register for transferring them in the horizontal direction, and an output portion.

The IL-CCD imaging element is capable of two sorts of read-out operations; a frame storage operation in which the signal charges stored in the picture elements are read out every frame period, and a field storage operation in which they are read out every field period. As compared with the frame storage operation, the field storage operation requires a half storage time and affords less feeling of afterimage. For this reason, the development of a single-plate color imaging device effecting the field storage operation is being promoted.

In color imaging by the use of the IL-CCD imaging element, the color dispersion images of a subject are formed by color filters, the color dispersion images are picked up by the IL-CCD imaging element, and the output signals of the IL-CCD imaging element are processed, thereby to obtain chrominance and luminance signals.

A conventional IL-CCD color imaging apparatus having a conventional color filter has a disadvantage to be described below. A row is the repetition of Ye (yellow) and G (green) and produces no signal for blue light. This has led to the disadvantage that, even when a blue linear image falls on the picture elements of the row, the corresponding signal is not included in the output signal of the IL-CCD imaging element. More specifically, the color filters have the recurrence unit of two picture elements in the horizontal direction and four picture elements in the vertical direction. In the resulting recurrence unit of eight picture elements, there are only two picture elements which afford the blue signal, and there are also only two picture elements which afford the red signal. This has led to the disadvantage that, when a fine pattern in red or blue enters, a faithful output signal is not obtained.

A solid-state color imaging system designed to alleviate this disadvantage is described in EP—A—0 067 043, which forms the starting point for the present invention. This document describes CCD imaging systems employing the color filters W (transparent), Cy (cyan) and Ye (yellow), in which any horizontal row includes at least one picture element for generating a red signal and at least one picture element for generating a blue signal within each repeat unit of eight picture elements. These imaging systems can therefore provide more accurate output signals than other prior art systems even for very fine patterns.

These systems have a significant disadvantage however as a consequence of their design, that the ratios of red (R) and blue (B) signals to the green signal (G) are very high. Filter arrangements are described for example in EP—A—0 067 043 which provide luminance signals of $(1.5R+2G+B)$ and $(1.5R+2G+1.5B)$. In each of these, the luminance signal contains excess red and blue components compared with for example the NTSC luminance signal $(0.3R+0.59G+0.11B)$.

If the green signal is then obtained by subtraction of the red and blue signals from the luminance signal, since these color signals are relatively large the signal-to-noise ratio of the green signal is disadvantageously reduced.

If alternatively a color difference system is used to avoid demodulating the green signal from the luminance signal, then the signal-to-noise ratio is maintained, but color reproducibility is degraded.

GB—A—2 014 397 describes a CCD imaging element providing improved color balance, its luminance signal being $(R+2G+B)$, but at the expense of reduced output signal accuracy. In each recurrent unit of eight picture elements, each horizontal row of two picture elements contains only one picture element for generating a red signal and only one for generating a blue signal. In each recurrence unit there are therefore only four picture elements for generating red signals and four for generating blue signals. The imaging accuracy of the CCD imaging element is therefore lower than that of those described in EP—A—0 067 043, in which each recurrence unit of eight picture elements comprises as many as six picture elements for generating red signals and six for generating blue signals.

The signal processing required to obtain chrominance and luminance signals from the CCD imaging element of GB—A—2 014 397 is different however from that used in EP—A—0 067 043. In GB—A—2 014 397, signals from two adjacent rows of picture elements of the CCD are compared to generate each line of chrominance and luminance signals. In EP—A—0 067 043, signals from pairs of adjacent rows of picture elements of the CCD are first added together, and then the sums of the signals from two adjacent pairs of rows of picture elements are compared to generate each line of chrominance and luminance signals. In each of these systems interlaced signals can be generated if required.

It is an object of this invention to provide a solid-state color imaging apparatus capable of producing faithful output signals even for very fine patterns while retaining a high signal-to-noise ratio and good color reproducibility.

According to the invention there is provided a solid-state color imaging apparatus wherein, in an array of light-sensitive picture elements, every second horizontal row of elements is composed of elements each for generating a value of the 'red' signal, the 'blue' signal or the 'red' and 'blue' signals each value being attenuated to an equal extent.

The features and advantages of this invention will be understood from the following detailed description of preferred embodiment of this invention taken in conjunction with the accompanying drawings, wherein:

Figure 1 is a schematic partial plan view showing the color arrangements of color filters and the mutual relations between the color filters and picture elements in a solid state imaging apparatus according to a first embodiment of the invention;

Figures 2, 6 and 8 are diagrams each showing the spectral characteristics of color filters;

Figure 3 is a diagram schematically showing the outputs of respective color signals from an interline transfer CCD imaging apparatus according to the first embodiment;

Figure 4 is a schematic block diagram of a single-plate type color imaging device; and

Figures 5 and 7 are schematic partial plan views each showing the color arrangement of color filters and the mutual relations between the color filters and picture elements in solid-state imaging apparatus according to second and third embodiments of the invention.

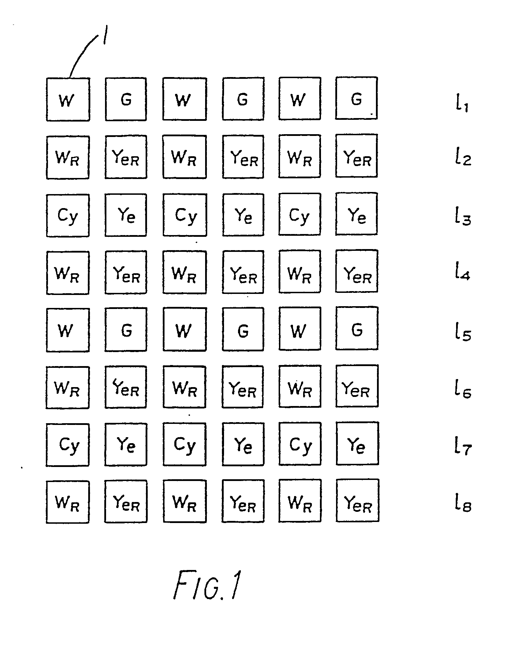

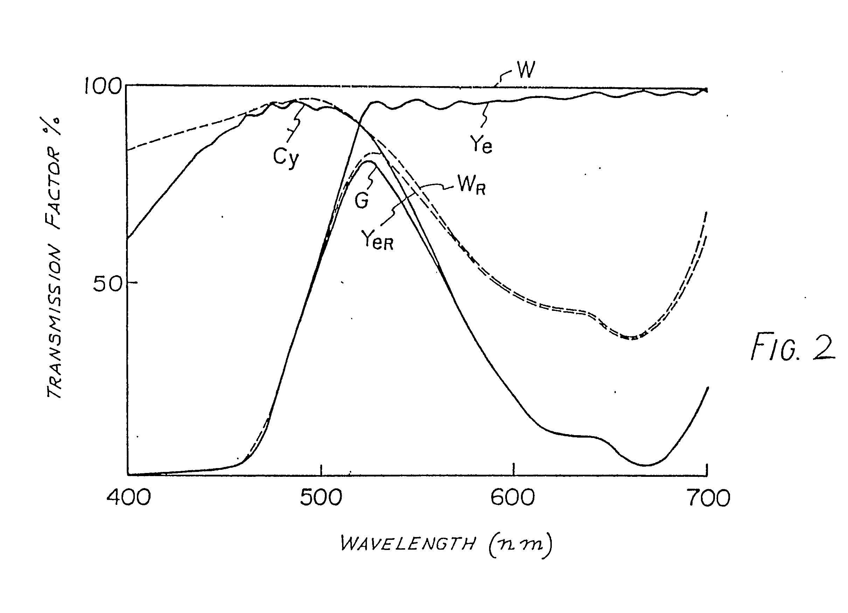

Referring to Figure 1, the plurality of picture elements 1 are arranged regularly in a horizontal direction and a vertical direction. The color filters are formed on the respective picture element 1. W indicates the color filter which is transparent. The transparent color filter transmits lights of blue, green and red. The color filter G transmits light of green, Ye light of yellow (namely, lights of green and red) and Cy light of cyan (namely, lights of blue and green). In preferred embodiments of the invention the color filters $W_R$ and $Ye_R$ exhibit the characteristics that transmission factors for the red light are controlled in a range of at least 25% to at most 75% of the red light transmission factors of the color filters W and Ye; in the first embodiment described herein they exhibit red transmission characteristics of 50% of those of the color filters W and Ye. The spectral characteristics of the respective color filters in the embodiment are illustrated in Figure 2.

The color filters are arrayed at a cycle of two picture elements in the horizontal direction, and at a cycle of four picture elements in the vertical direction. Rows in the horizontal direction are named $l_1, l_2, l_3, \ldots, l_8,$ ... successively from a certain row. From the left toward the right in the horizontal direction, W and G are repeatedly arranged in the horizontal rows $l_1$ and $l_5, \ldots$; $W_R$ and $Ye_R$ in the next rows $l_2$ and $l_6, \ldots$; Cy and Ye in the next rows $l_3$ and $l_7, \ldots$; and $W_R$ and $Ye_R$ in the next rows $l_4$ and $l_8, \ldots$.

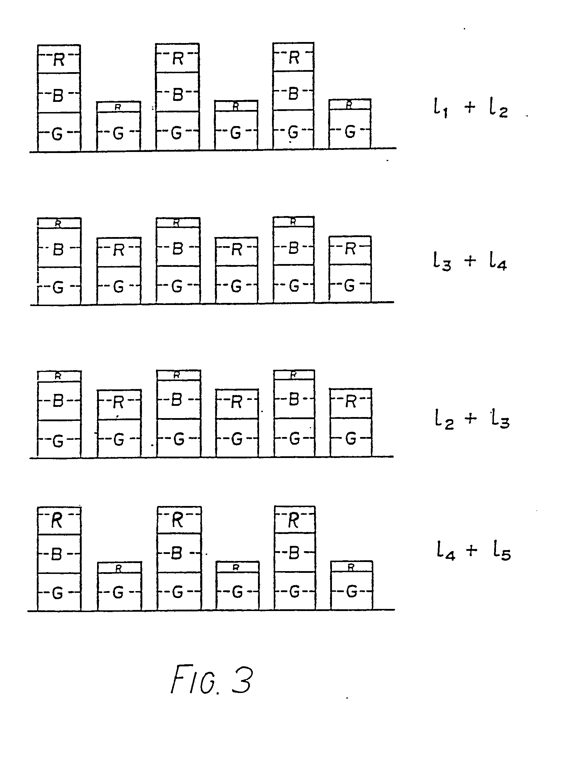

Figure 3 is a diagram schematically showing the magnitudes of the outputs of the signals from the first embodiment. As illustrated in Figure 3, in the output signal of $l_1+l_2$, the red signal is superposed as a modulation component $1/2R\cos\omega t$ with two picture elements forming one cycle in the horizontal direction, and the blue signal is superposed as a modulation component $B\cos\omega t$ with two picture elements forming one cycle in the horizontal direction.

On the other hand, a luminance signal which is the average value of the output signals is R+2G+B. That is, the output signal $S\{l_1+l_2\}$ of $l_1+l_2$ is indicated by the following equation:

$$S\{l_1+l_2\}=R+2G+B+1/2R\cos\omega t+B\cos\omega t$$

In the output signal of $l_3+l_4$, the red signal is modulated in the opposite phase and the blue signal is modulated in the same phase with respect to those in the output signal of $l_1+l_2$. The output signal $S\{l_3+l_4\}$ of $l_3+l_4$ is indicated by the following equation:

$$S\{l_4+l_4\}=R+2G+B-1/2R\cos\omega t+B\cos\omega t$$

The outputs $S\{l_2+l_3\}$ and $S\{l_4+l_5\}$ of other fields are indicated by the following equations:

$$S\{l_2+l_3\}=R+2G+B-1/2R\cos\omega t+B\cos\omega t$$

$$S\{l_4+l_5\}=R+2G+B+1/2R\cos\omega t+B\cos\omega t$$

In $l_2+l_3$ and $l_4+l_5$, the red signals are modulated in the opposite phases, and the blue signals in the same phases.

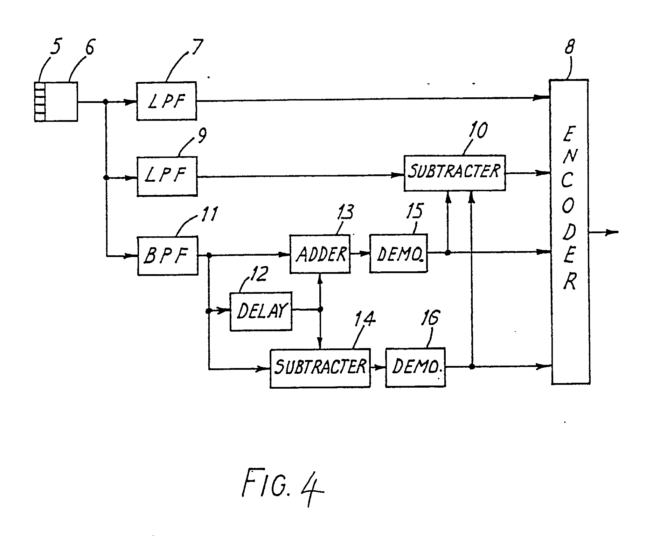

These signals may then be decoded by a conventional IL-CCD decoding circuit as shown in Figure 4.

Figure 4 is a schematic block diagram of a single-phase type color imaging device. The output signal of the IL-CCD imaging element 6 provided with the color filters 5, obtained as stated above, is passed through a low-pass filter 7 in order to remove the modulation components and becomes the luminance signal Y, which is applied to a color encoder 8. In view of the above equations, the luminance signal has a component of R+2G+B. Besides, the output signal of the IL-CCD imaging element 6 becomes a low frequency luminance signal through a low-pass filter 9 whose pass band is lower than that of the low-pass filter 7, and the luminance signal is applied to a subtracter circuit 10. Further, the output signal of the IL-CCD imaging element 6 can have the modulation components separated by passing through a band-pass filter 11 whose centre frequency is a frequency corresponding to the recurrence cycle of two picture elements in the horizontal direction.

The modulation component $T\{l_1+l_2\}$ of the $l_1+l_2$ rows is indicated by the following equation:

$$T\{l_1+l_2\}=1/2R\cos\omega t+B\cos\omega t$$

The modulation components of the $I_3+I_4$ rows, $I_2+I_3$ rows and $I_4+I_5$ rows are indicated by the following equations:

$$T\{I_3+I_4\}=1/2R\cos\omega t+B\cos\omega t$$

$$T\{I_2+I_3\}=-1/2R\cos\omega t+B\cos\omega t$$

$$T\{I_4+I_5\}=-1/2R\cos\omega t+B\cos\omega t$$

The output of the band-pass filter 11 is delayed by one horizontal scanning period by means of a delay line 12. When the output of the band-pass filter 11 and that of the delay line 12 are added by an adder circuit 13, the modulation component of the blue signal is separated as indicated by each of the following equations:

$$T\{I_1+I_2\}+T\{I_3+I_4\}=2B\cos\omega t$$

$$T\{I_2+I_3\}+T\{I_4+I_5\}=2B\cos\omega t$$

When the output of the delay line 12 and that of the band-pass filter 11 are subtracted by a subtracter circuit 14, the modulation component of the red signal is separated as indicated by each of the following equations:

$$T\{I_1+I_2\}-T\{I_3+I_4\}=R\cos\omega t$$

$$T\{I_2+I_3\}-T\{I_4+I_5\}=R\cos\omega t$$

The separated modulation components of the blue signal and red signal are respectively demodulated by demodulator circuits 15 and 16, to obtain the blue signal and red signal. When the red signal and blue signal are subtracted from the low frequency luminance signal in the subtracter circuit 10, the green signal is obtained. The luminance signal, green signal, red signal and blue signal thus obtained are applied to the color encoder 8, to obtain a color television signal.

As apparent from the above, the luminance signal can have the red component reduced sharply from for example $3/2R+2G+B$ in the prior art to $R+2G+B$ without any lowering in the modulation degrees of the red signal and the blue signal with respect to color filter arrangements in the prior art. The above measure is based on reducing the red signal component with note taken of the fact that the row $I_2$, $I_4$, $I_6$ and $I_8$ do not contribute to the modulation component of the red signal at all and that the red signals of these horizontal rows contribute merely to the luminance signal. In addition, the number of picture elements containing the red signals is six among eight picture elements likewise to that in the prior art document GB—A—2 014 397, and merely the signal quantity of each of four of the six picture elements is lower to 1/2. Four among the eight picture elements contain the blue signals, and the signal quantity is not changed at all. Even when a very fine pattern in red or blue enters, a faithful picture scarcely differing from that in the prior art is obtained.

The first embodiment has been explained as to the case where the red signal component of $W_R$ or $Ye_R$ is 50% of W or Ye. When the percentage is below 25%, the red component of the luminance signal is further reduced, and it can be expected to enhance the S/N (signal-to-noise) ratio and the color reproducibility. With such a small component of the red signal, however, the picture element containing the red signal or the sampling point of red is no longer useful, and the faithful reproduction of a very fine pattern becomes difficult. In contrast, when the percentage is above 75%, the effect of reducing the component of the red signal in the luminance signal is hardly achieved, and the enhancements of the S/N ratio and the color reproducibility cannot be desired over the prior art. Thus, the proper red signal components of $W_R$ and $Ye_R$ are at least 25% to at most 75% of the components of W and Ye.

Using the output signals from the solid-state imaging element of the solid-state imaging device according to the present invention, a color television signal is produced by a device similar to the single plate color imaging apparatus as shown in Figure 4.

The filters in Figure 1 can be readily realized in practice in such a way that the rows $I_2$, $I_4$, $I_6$ and $I_8$ are formed by the repetition of the color filters W and Ye similarly to the prior art, whereupon thin cyan filters by which the transmission factor for the red component is rendered at least 25% to at most 75% are superposed on the respective horizontal rows.

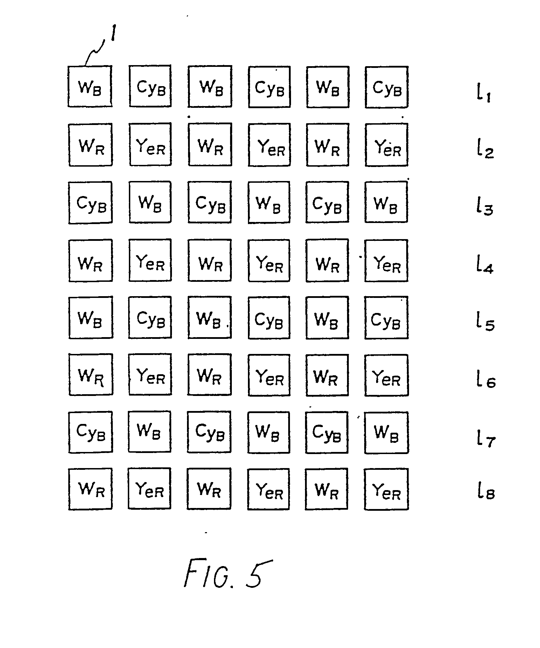

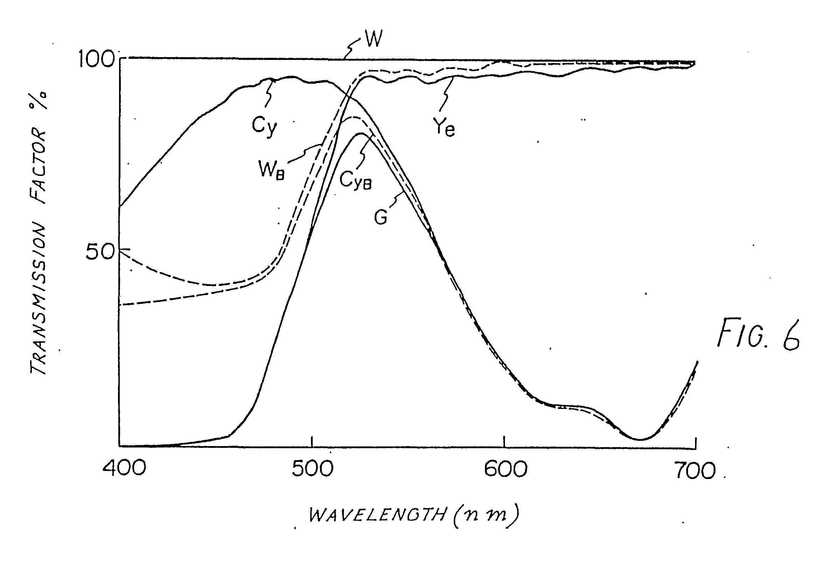

Figure 5 is a schematic partial plan view showing the layout of color filters and the mutual relations between the color filters and picture elements in a solid-state imaging apparatus according to a second embodiment of this invention. The color filters are arrayed at a cycle of two picture elements in the horizontal direction and at a cycle of four picture elements in the vertical direction. The color filters $W_B$ and $Cy_B$ exhibit the characteristics that transmission factors for blue are controlled in a range of at least 25% to at most 75% of the blue transmission factor of the color filter W, and in the present embodiment, they exhibit blue transmission characteristics of 50% of that of the color filter $W_R$ as illustrated in Figures 2 and 6. The color filters $W_R$ and $Ye_R$ exhibit the red transmission characteristics of 50% of that of the color filter W as in the foregoing embodiment.

The color filters are arranged by repeating $W_B$ and $Cy_B$ in rows $l_1$ and $l_5$, . . .; $W_R$ and $Ye_R$ in the next rows $l_2$ and $l_6$, . . .; $Cy_B$ and $W_B$ in the next rows $l_3$ and $l_7$, . . .; and $W_R$ and $Ye_R$ in the next rows $l_4$ and $l_8$, . . . .

The output signals of respective horizontal scanning lines in the field storage operation are indicated by the following equations:

$$S\{l_1+l_2\}=R+2G+B+1/2R\cos\omega t+1/2B\cos\omega t$$

$$S\{l_3+l_4\}=R+2G+B-1/2R\cos\omega t+1/2B\cos\omega t$$

$$S\{l_2+l_3\}=R+2G+B-1/2R\cos\omega t+1/2B\cos\omega t$$

$$S\{l_4+l_5\}=R+2G+B+1/2R\cos\omega t+1/2B\cos\omega t$$

In the adjacent horizontal scanning line periods, the blue signals are modulated in the same phases, and the red signals in the opposite phases. Also, in the present embodiment, both the red and blue signal components decrease to afford a luminance signal R+2G+B in contrast to the luminance signal 3/2R+2G+3/2B in the prior-art case of employing the color filters, W, Cy and Ye, while the modulation components of the signals R and B are quite equal to those in the prior art. Thus, the S/N ratios of the color signals of red and blue do not degrade and the color reproducibility is good, and a faithful picture which scarcely differs from that in the prior art is produced for a very fine pattern in red or blue.

The filters in Figure 5 can be readily realized in practice in such a way that, after the Ye and Cy filters have been formed, thin yellow filters with which the transmission factor for the blue component becomes at least 25% to at most 75% are superposed on the respective horizontal rows $l_1$, $l_3$, $l_5$, $l_7$, . . ., while thin cyan filters with which the transmission factor for the red component becomes at least 25% to at most 75% are superposed on the respective horizontal rows $l_2$, $l_4$, $l_6$, $l_8$, . . . .

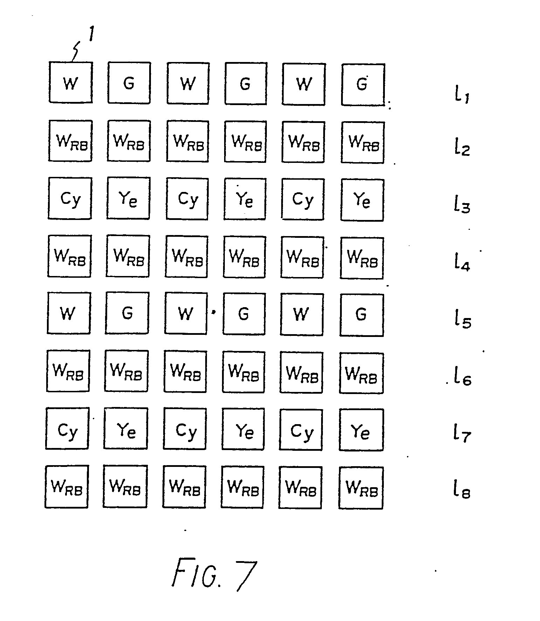

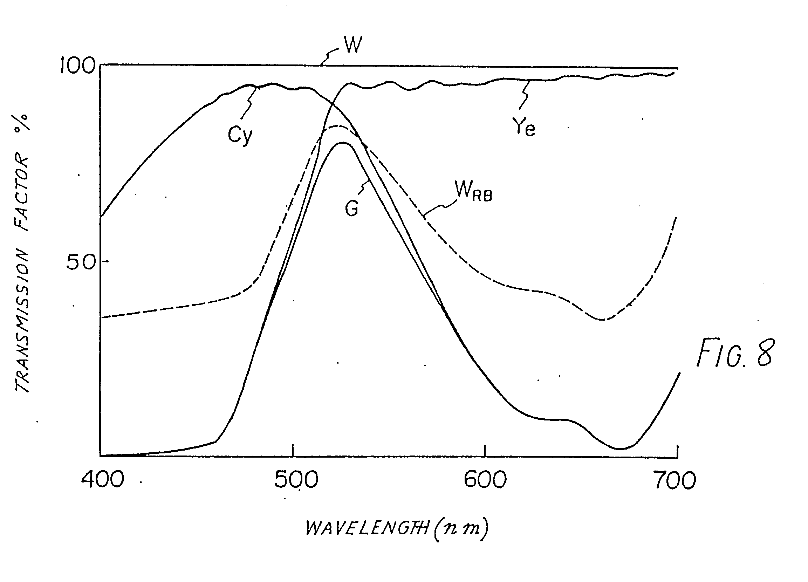

Figure 7 is a schematic partial plan view showing the layout of color filters and the mutual relations between the color filters and picture elements in a solid-state imaging apparatus according to third embodiment of the present invention. The color filters are arrayed at a cycle of two picture elements in the horizontal direction, and at a cycle of four picture elements in the vertical direction. The filter W transmits lights of red, green and blue, G light of green, Cy lights of blue and green, and Ye lights of green and red. The filter $W_{RB}$ exhibits the characteristics that transmission factors for the red and blue lights are respectively controlled to at least 25% to at most 75% with respect to those of the filter W, and in the present embodiment, it exhibits transmission characteristics of 50% for both red and blue in comparison with those of the filter W as illustrated in Figure 8.

The color filters are arrayed by the repetition of W and G in $l_1$ and $l_5$, . . .; by the continuation of $W_{RB}$ throughout the horizontal direction in $l_2$, $l_4$, $l_6$, and $l_8$, . . .; and the repetition of Cy and Ye in $l_3$ and $l_7$, . . . .

The output signals of respective horizontal scanning lines in the field storage operation are indicated by the following equations:

$$S\{l_1+l_2\}=R+2G+B+1/2R\cos\omega t+1/2B\cos\omega t$$

$$S\{l_3+l_4\}=R+2G+B-1/2R\cos\omega t+1/2B\cos\omega t$$

$$S\{l_2+l_3\}=R+2G+B-1/2R\cos\omega t+1/2B\cos\omega t$$

$$S\{l_4+l_5\}=R+2G+B+1/2R\cos\omega t+1/2B\cos\omega t$$

In the adjacent horizontal scanning line periods, the blue signals are modulated in the same phases, and the red signals in the opposite phases. Also in the present embodiment, both the red and blue signal components decrease to afford a luminance signal R+2G+B.

Meanwhile, the modulation components of the signals R and B are quite equal to those in the prior art. Thus, the S/N ratios of the color signals of red and blue do not degrade at all, and the color reproducibility is good. Besides, a faithful picture which scarcely differs from that in the prior art is produced for a very fine pattern in red or blue.

The filters in Figure 7 can be readily realized in practice in such a way that, after the filters W have been formed, thin yellow filters with which are transmission factor for the blue component becomes at least 25% to at most 75% and thin cyan filters with which the transmission factor for the red component becomes at least 25% to at most 75% are superposed on the respective horizontal rows $l_2$, $l_4$, $l_6$, $l_8$, . . . .

The output signals from the solid-state imaging element of the solid-state imaging apparatus of the second or third embodiment produce a color television signal by the use of a device similar to the single-phase type color imaging apparatus as shown in Figure 4. Moreover, they produce a quite similar color television signal by the use of a method wherein signals delivered in unit of the picture elements of each horizontal scanning line and signals delayed by 1 line period by means of a CCD delay line are respectively sampled and held, red and blue signals are separated by matrix calculations, and a luminance signal is separated by a low-pass filter.

In case of a color filter arrangement in which the positions of the Cy filters and the Ye filters are replaced with each other in the color filter arrangement shown in Figure 1, 5 or 7, the effects intended by the invention are similarly achieved by quite the same technique.

Needless to say, even when applied to a frame transfer CCD imaging element, the invention brings forth quite the same effects as in the interline transfer CCD.

### Claim

A solid-state imaging apparatus comprising an array of light-sensitive picture elements comprising color filters arrayed in sets of eight filters at repeat units of two picture elements in a horizontal direction and four picture elements in a vertical direction so that 'green' signals corresponding to green light are derived from all the picture elements, and so that within each set of eight picture elements each horizontal row comprises at least one picture element for generating 'blue' signals corresponding to blue light and at least one picture element for generating 'red' signals corresponding to red light, wherein each horizontal scan line output from the array of picture elements comprises the sum of signals from two adjacent horizontal rows of picture elements, in which the modulations of one of the 'red' and 'blue' signals are in phase between adjacent horizontal scan lines and the modulations of the other of the 'red' and 'blue' signals are out of phase between adjacent horizontal scan lines, an interlace operation being carried out by changing in the vertical direction for each scanned field the combination of horizontal rows of picture elements used to generate the image signal, characterised in that every second horizontal row of picture elements is composed of picture elements each for generating a value of the 'red' signal, the 'blue' signal or the 'red' and 'blue' signals, each value being attenuated to an equal extent.

### Patentanspruch

Festkörperfarbabbildungsgerät mit einem Feld lichtempfindlicher Bildelemente mit Farbfiltern, die in Sätzen von acht Filtern an Wiederholungsstellen von zwei Bildelementen in einer Horizontalrichtung und von vier Bildelementen in einer Vertikalrichtung so angeordnet sind, daß "Grun"-Signale entsprechend dem grünen Licht von allen Bildelementen abgeleitet werden und daß innerhalb jedes Satzes von acht Bildelementen jede Horizontalreihe mindestens ein Bildelement zum Erzeugen von "Blau"-Signalen entsprechend dem blauen Licht und mindestens ein Bildelement zum Erzeugen von "Rot"-Signalen entsprechend dem roten Licht aufweist, wobei jedes horizontale Abtastlinien-Ausgangssignal von dem Feld der Bildelemente die Summe der Signale von zwei benachbarten Horizontalreihen von Bildelementen aufweist, wobei die Modulationen des "Rot"- oder "Blau"-Signals zwischen benachbarten horizontalen Abtastlinien in Phase sind und die Modulationen der anderen "Blau"- bzw. "Rot"-Signale zwischen benachbarten horizontalen Abtastlinien außer Phase sind, wobei eine Verschachtelungsoperation durch Wechseln der Kombination der verwendeten Horizontalreihen von Bildelementen in vertikaler Richtung für jedes abgetastete Feld ausgeführt wird, um das Bildsignal zu erzeugen, dadurch gekennzeichnet, daß jede zweite Horizontalreihe der Bildelemente aus Bildelementen jeweils zum Erzeugen eines Wertes des "Rot"-Signals, des "Blau"-Signals oder der "Rot"- und "Blau"-Signale zusammengesetzt und jeder Wert in gleichem Maße abgeschwächt wird.

### Revendication

Appareil d'imagerie à corps solide comprenant un réseau d'éléments d'image sensibles à la lumière comportant des filtres de couleur disposés en jeux de huit filtres à des unités répétées de deux éléments d'image dans une direction horizontale et de quatre éléments d'image dans une direction verticale de sorte que des signaux "vert" correspondant à la lumière verte sont obtenus à partir de tous les éléments d'image, et que, dans chaque jeu de huit éléments d'image, chaque rangée horizontale comprend au moins un élément d'image pour produire des signaux "bleu" correspondant à la lumière bleue et au moins un élément d'image pour produire des signaux "rouge" correspondant à la lumière rouge, où chaque sortie d'une ligne de balayage horizontal en provenance du réseau d'éléments d'image comprend la somme de signaux provenant de deux rangées horizontales adjacentes d'éléments d'image, dans lequel les modulations des signaux "rouge" ou "bleu" sont en phase entre lignes adjacentes de balayage horizontal et les modulations des signaux "bleu" ou "rouge" sont déphasées entre lignes adjacentes de balayage horizontal, une opération d'entrelaçage étant effectuée par le changement dans la direction verticale pour chaque champ balayé de la combinaison de rangées horizontales des éléments d'image utilisés pour produire le signal d'image, caractérisé en ce que toutes les secondes rangées horizontales d'éléments d'image sont composées d'éléments d'image chacun pour produire une valeur du signal "rouge", du signal "bleu" ou des signaux "rouge" et "bleu", chaque valeur étant atténuée à un degré égal.

FIG.1

FIG. 2

EP 0 119 862 B1

$l_1 + l_2$

$l_3 + l_4$

$l_2 + l_3$

$l_4 + l_5$

FIG. 3

FIG. 4

| | | | | | | |
|---|---|---|---|---|---|---|
| $W_B$ | $Cy_B$ | $W_B$ | $Cy_B$ | $W_B$ | $Cy_B$ | $l_1$ |
| $W_R$ | $Ye_R$ | $W_R$ | $Ye_R$ | $W_R$ | $Ye_R$ | $l_2$ |
| $Cy_B$ | $W_B$ | $Cy_B$ | $W_B$ | $Cy_B$ | $W_B$ | $l_3$ |
| $W_R$ | $Ye_R$ | $W_R$ | $Ye_R$ | $W_R$ | $Ye_R$ | $l_4$ |
| $W_B$ | $Cy_B$ | $W_B$ | $Cy_B$ | $W_B$ | $Cy_B$ | $l_5$ |
| $W_R$ | $Ye_R$ | $W_R$ | $Ye_R$ | $W_R$ | $Ye_R$ | $l_6$ |
| $Cy_B$ | $W_B$ | $Cy_B$ | $W_B$ | $Cy_B$ | $W_B$ | $l_7$ |
| $W_R$ | $Ye_R$ | $W_R$ | $Ye_R$ | $W_R$ | $Ye_R$ | $l_8$ |

FIG. 5

FIG. 6

EP 0 119 862 B1

| | | | | | | |
|---|---|---|---|---|---|---|
| W | G | W | G | W | G | $l_1$ |
| $W_{RB}$ | $W_{RB}$ | $W_{RB}$ | $W_{RB}$ | $W_{RB}$ | $W_{RB}$ | $l_2$ |
| Cy | Ye | Cy | Ye | Cy | Ye | $l_3$ |
| $W_{RB}$ | $W_{RB}$ | $W_{RB}$ | $W_{RB}$ | $W_{RB}$ | $W_{RB}$ | $l_4$ |
| W | G | W | G | W | G | $l_5$ |
| $W_{RB}$ | $W_{RB}$ | $W_{RB}$ | $W_{RB}$ | $W_{RB}$ | $W_{RB}$ | $l_6$ |
| Cy | Ye | Cy | Ye | Cy | Ye | $l_7$ |
| $W_{RB}$ | $W_{RB}$ | $W_{RB}$ | $W_{RB}$ | $W_{RB}$ | $W_{RB}$ | $l_8$ |

FIG. 7

FIG. 8

TRANSMISSION FACTOR %

WAVELENGTH (nm)